# EUROPEAN PATENT APPLICATION

(11) **EP 3 786 595 A1**
(43) Date of publication of application: **03.03.2021**
(21) Application number: 20191276.3
(22) Date of filing: 17.08.2020
(51) Int. Cl.: G01G 19/44, A61G 5/14

(54) **WEIGHING APPARATUS**

(30) Priority: 20.08.2019 GB 201911923
(71) Applicant: MARSDEN WEIGHING MACHINE GROUP LIMITED, Rotherham, South Yorkshire S60 1DX (GB)
(72) Inventor: BLACK, Richard, Rotherham, South Yorkshire S60 1DX (GB); COATES, Mark, Rotherham, South Yorkshire S60 1DX (GB); FLOOD, Tim, Rotherham, South Yorkshire S60 1DX (GB); SANDERSON, Beth, Rotherham, South Yorkshire S60 1DX (GB); HALL, Richard, Rotherham, S60 1DX (GB)
(74) Representative: Harrison IP Limited

(57) **Abstract**

There is disclosed apparatus (100) for weighing a person with reduced mobility, the apparatus (100) comprising: a seat portion (102); scales (104) for weighing the person when sitting on the seat portion; and a lifting mechanism (106) to assist the person in standing up from the seat portion (102).

## Description

### Field of the Invention

The present invention relates to apparatus for weighing a person with reduced mobility.

### Background of the invention

There are times when it is appropriate or necessary to weigh a person. Conventionally this is done by the person standing on a set of scales and taking a reading from the scales. However, for a person with reduced mobility, it can be difficult or impossible to stand up for a prolonged period of time. It may also be impossible for the person to stand without assistance, or without involuntary movement, and so on, which can prevent an accurate weight measurement being taken.

It might be envisaged to employ means to weigh the person while sitting down, but moving from a sitting to a standing position afterwards (and potentially *vice versa)* can for a person of reduced mobility be more challenging than maintaining a standing position, even with assistance from a helper. These difficulties can outweigh the benefits of taking the weight measurement in a sitting position.

The present invention aims to address problems in the art such as (but not limited to) those mentioned above.

### Summary of the invention

According to a first aspect of the present invention, there is provided apparatus for weighing a person with reduced mobility (with or without assistance), the apparatus comprising: a seat portion; scales for weighing the person when sitting on the seat portion; and a lifting mechanism to assist the person in standing up from the seat portion.

Accordingly the apparatus can provide the advantages of weighing the person in a sitting position without suffering the corresponding disadvantage of the person with reduced mobility having to transition themselves from a sitting to standing position. It can also assist a helper in transitioning the person from sitting to standing and *vice versa.*

The scales may comprise at least one load cell of any appropriate type, or any other means of recording an applied weight of the person. Essentially any weighing device may be used if it is able to fit within the apparatus and accurately record the weight of a person sitting on the seat portion.

Preferably the lifting mechanism is powered so that, in use, it urges the person to the standing position. The apparatus may be self-powered, powered by an operator, or powered by an external power supply (such as the mains, for example), or any appropriate combination of the above. Alternatively the lifting mechanism may be unpowered, in which case there may be provided means for manually operating the lifting mechanism. The lifting mechanism may include at least one handle or other lifting device to allow an operator to control the position of the seat portion.

Preferably the lifting mechanism acts on the seat portion and the seat portion in turn urges the person to a standing position, such that the lifting mechanism is operable to move the centre of gravity of the seat portion in an upwards direction and/or the lifting mechanism is operable to rotate seat portion so as to raise the rear of the seat relative to the front of the seat. The term 'upwards direction' does not imply an absolutely vertical direction but a direction having at least an upwards component. The term 'rear' is as would be regarded as the rear of the seat portion when the person is sat on it.

The lifting mechanism may be operable in reverse to assist the person in sitting down on the seat portion.

Preferably the lifting mechanism is operable to move the seat portion between a sitting position, for engaging with the person in a sitting position, and a standing position, for engaging with the person in a standing position. In the sitting position, the seat portion is substantially horizontal and engages with the apparatus in a substantially vertical direction, facilitating accurate weighing of the person sat on the seat portion. Normally, in the sitting position, the seat portion contacts the scales and does not contact the lifting mechanism. Preferably the apparatus is operable for an applied weight range (that is, typically the weight of the person) of between 0 kg and at least 200, 250, 300, 350 or 400 kg.

In contrast to the above, in the standing position, the seat portion preferably contacts the lifting mechanism. The seat portion may be held in place by the lifting mechanism, may rest on it, and/or may be freely moveable away from the lifting mechanism. This may be true both in the sitting position and in the standing position. The term 'held in place' may connote the movement of the seat portion being restricted or resisted by the lifting mechanism, preferably such that the seat portion resists the (inadvertent or otherwise) application of forces on the seat portion by the person in the standing position unless and until the lifting mechanism is operated (or action is otherwise taken) to transition the seat portion to the sitting position. In the sitting position, the seat may typically be held in place but also have an allowed range of movement.

The seat portion typically resists forces from the person in the sitting position as well, typically by transmitting the forces to the set of scales on which the seat portion normally rests in that position. In another operating mode the weight of the person applied to the seat portion in the standing position can be used to cause the seat portion to return to the sitting position.

Preferably the seat portion has a first range of movement from the standing position to the sitting position, the lifting mechanism has a second range of movement from the standing position to the sitting position, and the second range of movement is greater than the first, such that when the seat portion reaches the end of its movement and comes to rest on the scales, the lifting mechanism is operable to continue its movement into clearance of the seat portion. 'Moving into clearance' preferably has the normal meaning in the art of something moving into a position where it is unable to come into contact with another object or part of an object.

Preferably the lifting mechanism comprises a lifting member which engages with the seat portion at an engagement region, and the apparatus further comprises at least one actuator guide for restraining the lifting member at the end of a movement of the seat portion to the sitting position. This can be useful, for example, if continuing to move the lifting member would cause the lifting mechanism to come into contact with the seat portion again.

Typically the seat portion may rotate about a seat pivot axis between a first angle corresponding to the sitting position and a second angle corresponding to the standing position, in which case preferably the lifting member is a linearly extendable member, such that reciprocating motion of the extendable member is converted into a rotation of the seat portion about the seat pivot axis. In some cases a rotational input could instead be applied.

In certain embodiments, the freedom of movement of the seat portion varies in dependence on the rotation of the seat portion about the seat pivot axis. The freedom of movement is typically but not necessarily freedom of movement about the seat pivot axis. The freedom of movement may also include linear movements in any appropriate direction, for example to allow adjustment of the seat portion.

In one aspect, seen for example in an alternative embodiment described below, the lifting mechanism comprises a lifting member which (again) engages with the seat portion at an engagement region and pivots about a further pivot axis located in the engagement region, wherein the further pivot axis is parallel to the seat pivot axis, such that the angle subtended between the lifting member and the seat portion varies as the seat portion moves between the sitting position and the standing position, and wherein the freedom of movement of the seat portion varies in dependence on the subtended angle.

In any of the above aspects (or otherwise) the lifting mechanism may comprise an actuator, piston assembly, gas strut, or any other appropriate mechanism for causing axial movement of an appropriate lifting member. A gas strut may have preloading constraints which may cause difficulties with operation of the device.

In other aspects, other means of applying a force or a torque may be used. For example a torque may be applied directly about the seat pivot axis (for example using an electric motor and the like, possibly applied via appropriate gearing and, if necessary, a clutch) so as to cause direct rotation of the seat portion.

The lifting member is preferably constrained within an aperture in an actuator link plate attached to the seat portion, the aperture defining the linear freedom of movement of the seat portion relative to the lifting member. The aperture may be shaped such that rotation of the lifting member relative to the seat portion causes the lifting member to be constrained by different parts of the aperture, preferably wherein different parts of the aperture permit different degrees of freedom of the seat portion relative to the lifting member. By virtue of these features or otherwise, the further pivot axis may in some cases be a virtual pivot, which the lifting member effectively rotates around but does not contact or extend fully towards. A plurality of actuator link plates may be provided, for example one on either side of the lifting member.

The internal aperture preferably acts as a cam surface, and the lifting member interacts with the cam surface via a follower member, which may for example be a bar extending transverse to the aperture and attached to the lifting member.

In the case where the aperture defines different degrees of freedom (or otherwise), the lifting mechanism may be operable, when moving the seat portion into the sitting position, to retract the lifting member until it urges the seat portion into the sitting position, and then to extend the lifting member again by an amount sufficient to ensure that the lifting member no longer contacts the seat portion but the seat portion remains in the sitting position. This can ensure that there is good separation between the lifting member and its connection to the seat portion while weighing is taking place, so that the seat portion can displace vertically without coming into contact with the lifting member (which could affect the weight measurement).

Preferably the apparatus further comprises at least one rest selected from: a back rest, at least one foot rest, and at least one arm rest. In that case, said at least one rest is preferably moveable between a deployed position and a stowed position, wherein when said at least one rest is in the stowed position, unobstructed access is provided to the seat portion from the front and from at least one side of the apparatus. Preferably wheelchair users can directly access the seat portion from at least one side of the apparatus.

Preferably the said at least one rest is able to rotate at least 90, 120, 180 or more degrees, and is preferably able to rotate so as to be at least flush with the apparatus such that said at least one rest does not protrude substantially forwards or sideways from the apparatus. The foot rests for example may rotate at least 120, 150, 160 or 180 degrees around a vertical axis. The arm rests for example may rotate at least 90, 120, 150 or 180 degrees around a horizontal axis such that they do not obstruct the seat portion either from the front or from the sides of the apparatus.

The back rest is preferably independent of the seat portion but may in some cases be attached so that the entire back rest and seat portion assembly moves as one.

Although various aspects and embodiments of the present invention have been described separately above, any of the aspects and features of the present invention can be used in conjunction with any other aspect, embodiment or feature where appropriate. For example apparatus features may where appropriate be interchanged with method features. References to single entities should, where appropriate, be considered generally applicable to multiple entities and vice versa. Unless otherwise stated herein, no feature described herein should be considered to be incompatible with any other, unless such a combination is clearly and inherently incompatible. Accordingly, it should generally be envisaged that each and every separate feature disclosed in the introduction, description and drawings is combinable in any appropriate way with any other unless (as noted above) explicitly or clearly incompatible.

### Brief description of the drawings

The invention will now be described further, by way of example, with reference to the accompanying drawings, in which:
Figure 1 is a schematic of an apparatus for weighing a person with reduced mobility;
Figures 2A and 2B are schematics showing the seat portion of the apparatus of Figure 1 in a sitting position and in a standing position;
Figure 3 is a schematic showing the connection of a linearly extending lifting member with the seat portion of the apparatus of Figure 1;
Figure 4 is a diagram showing a triangle defined by the arrangement of pivot points X, Y and Z shown in Figure 3;
Figure 5 is a schematic of a practical embodiment of the apparatus of Figure 1;
Figures 6A and 6B are schematics showing the engagement of the linearly extending lifting member of Figure 3 within an aperture of a connecting plate attached to the seat portion, shown in the sitting position and in the standing position;
Figures 7A and 7B are front and side views of an arrangement including the connecting plate of Figures 6A and 6B and two actuator guides;
Figures 8A to 8C are schematics showing three stages of relative movement and engagement between the aperture and transverse bar shown in Figures 7A and 7B;
Figures 9A and 9B are schematics of a further embodiment, showing the engagement of the linearly extending lifting member of Figure 3 within an aperture of a connecting plate attached to the seat portion, shown in the sitting position and in the standing position;
Figure 10 shows an aperture suitable for use in the apparatus of Figures 9A and 9B;
Figures 11A to 11D show detailed dimensions of a connecting plate including an aperture suitable for use in the apparatus of Figures 9A and 9B;
Figures 12A to 12D are schematics showing four stages of relative movement and engagement between the aperture of Figure 10 and a transverse bar driven by a lifting member;
Figures 13A and 13B are perspective views of an example weighing chair embodying the apparatus of Figure 1; and
Figures 14A and 14B are perspective views of the weighing chair of Figures 13A and 13B with the seat in a sitting position and in a standing position.

### Detailed description of the preferred embodiment(s)

The preferred embodiment provides an apparatus (typically a weighing chair) for weighing people with reduced mobility. Various aspects and features of the apparatus will now be described.

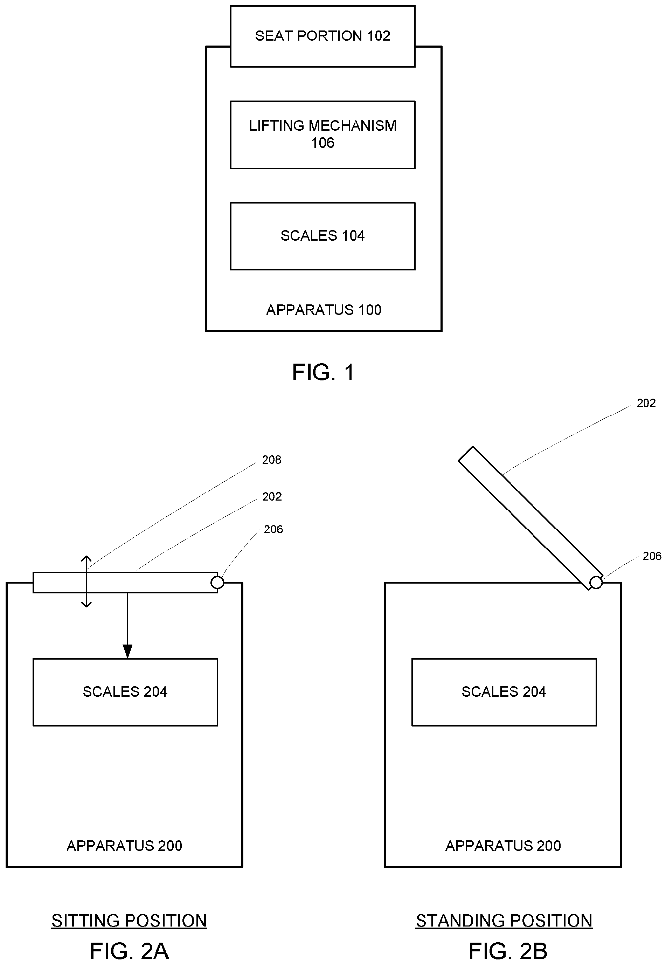

Figure 1 is a schematic of an apparatus for weighing a person with reduced mobility. This apparatus has broad applicability and may or may not be in the form of a chair. The apparatus 100 includes a seat portion 102 (for receiving the person), a set of scales 104 (for weighing the person) and a lifting mechanism 106 (for assisting the person in standing up from the apparatus).

Figures 2A and 2B are schematics showing the seat portion of the apparatus of Figure 1 in a sitting position and in a standing position. These figures are a side view. In use, the person would sit on the seat portion with legs positioned at the right of the figure. The pictured apparatus 200 includes the seat portion 202 as before, the scales 204, a pivot point 206 or hinge attaching the seat portion 202 to the apparatus 200. While in the sitting position, a small amount of unrestricted and unsupported movement 208 is possible in a vertical direction, allowing the person sitting on the seat portion 202 to be weighed accurately. At the time of weighing, the seat portion 202 is supported solely by the scales 204. The scales 204 includes at least one load cell. In one variant, the seat portion 202 is supported by a load cell at each corner, and the outputs of all the load cells are summed to provide a measure of the applied weight.

Other arrangements are of course possible. For example, the pivot point 206 may be connected to or via the load cell(s) directly, or the lifting mechanism may be configured such that the pivot point 206 is only a virtual pivot, and the seat portion 202 does not physically connect to it.

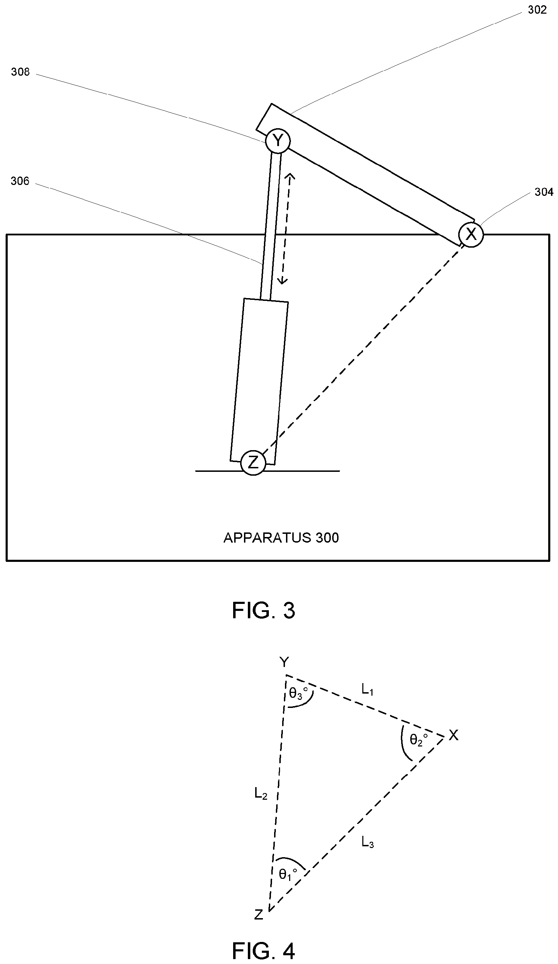

Figure 3 is a schematic showing the connection of a linearly extending lifting member with the seat portion of the apparatus of Figure 1. The apparatus 300 includes the seat portion 302 as before, and a pivot point (X) 304 attaching the seat portion 302 to the apparatus 300. As noted above, point (X) 304 may be a virtual pivot point in the sense that the seat portion 302 does not physically connect to it, or to the apparatus (except via the scales, not shown). A linearly extending member 306 connects to the seat portion 302 at the pivot point (Y) 308. As with point (X) 304, point 308 can be a virtual pivot point in the sense that the member 306 rotates about it but does not physically connect to it, but in the main embodiment it is effectively a 'normal' pivot point.

Figure 4 is a diagram showing a triangle defined by the arrangement of pivot points X, Y and Z shown in Figure 3. Lengths L₁ and L₃ are fixed and measurable/predetermined. Length L₂ varies as the extending member 306 of Figure 3 is extended or retracted. Angles θ₁, θ₂ and θ₃ vary as the extending member 306 is extended or retracted, causing a change in rotation of the seat member and a transition to/from the sitting and standing positions.

The law of cosines (*c*² = *a*² + *b*² - 2*ab* cos *C*) can be used in conjunction with a sensed or known extension of the linearly extending member 306, or the law of sines (sin(*A*)/*a* = sin(*B*)/*b* = sin(*C*)/*c*) can be used in conjunction with any measured or known angle θₙ, to determine all remaining angles. This can be used in particular to determine the angle θ₃ for each moment as the seat portion moves from sitting to standing position (which transition can be expressed with the ranges L_{SITTING} < L₂ < L_{STANDING}, or θ_{SITTING} < θ₂ < θ_{STANDING}).

Notwithstanding the above, the key point is that angle θ₃ subtended between the linearly extending member 306 and the seat portion 302 varies predictably as the seat portion transitions between sitting and standing positions (and vice versa). Angles θ₁ and θ₂ also varies predictably as the seat portion transitions between positions.

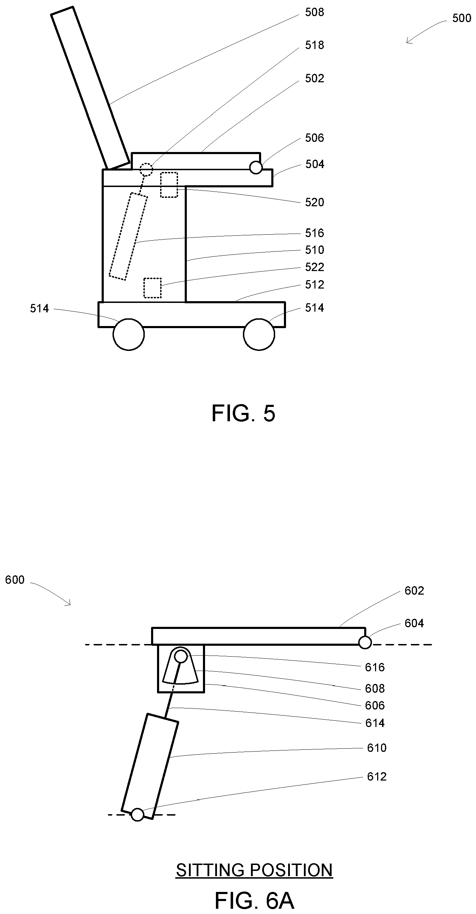

Figure 5 is a schematic of a practical embodiment of the apparatus of Figure 1. A weighing chair 500 is shown, including a seat portion 502, a lower seat portion 504 fixed to the rest of the apparatus, a pivot point 506 where the seat portion 502 rotates relative to the lower seat portion 504. The chair 500 further includes a back rest portion 508, a lower support 510, a bottom base 512, wheels 514, an actuator of an appropriate type 516, the pivot point 518 where the actuator 516 rotates relative to the seat portion 502, and finally the scales 520 for measuring the weight of a person sitting on the seat portion 502 when it is in the sitting position (as shown). A power and/or control system 522 provides power to the actuator 516, and can be controlled by a control panel (not shown) which can be attached in any appropriate place on the chair.

The term 'actuator' is used in a general sense to connote any device capable of applying a force or causing movement on demand, and may, for example, include devices capable of applying a torque or causing a rotation. The actuator 516 may nevertheless comprise an actuator within the narrow sense of the term in the field of mechanical engineering. The actuator 516 may alternatively or additionally include a piston arrangement, gas strut (with appropriate preloading), electric motor with appropriate gearing and translation from rotational to linear movement as necessary, magnetic actuation, pneumatic or hydraulic mechanisms as appropriate for any given application.

Preferably a strain (or other) load cell is used as the scales (that is, simply to weigh the person). Appropriate zeroing and/or calibration may be provided, for example periodically to weigh the seat portion without a person sat on it (either manually or automatically). Other types of scales are of course possible, including devices based on magnetic, inductive, mechanical, optical, or piezoelectric principles, and so on.

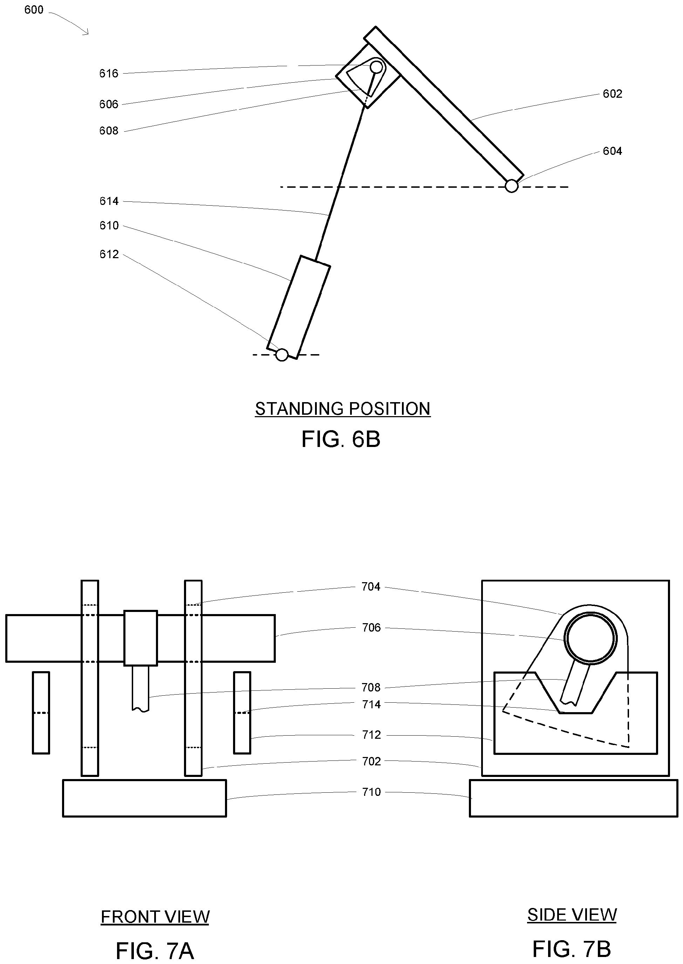

Figures 6A and 6B are schematics showing the engagement of the linearly extending lifting member of Figure 3 within an aperture of a connecting plate attached to the seat portion, shown in the sitting position and in the standing position. The arrangement 600 includes a seat portion 602 as above, the seat portion pivot point 604, a connecting plate 606 attached to the seat portion 602, an aperture 608 within the plate 606, an actuator or similar 610, an actuator pivot point 612, a linearly extending member 614, and a rod 616 extending transversely through the aperture 608 and fixed to the distal end of the linearly extending member 614.

In the present embodiment two separate connecting plates 606 are provided with two separate but matching apertures 608, and the rod 616 passes transversely between both, threading through a hole in the distal end of the member 614 so as to secure it in place and prevent out of plane rotations (as pictured in Figures 6A and 6B) between the actuator and seat portion.

It will be appreciated the weight from the seat and/or the weight of a user urges the seat 602 and correspondingly the plates 606 onto the transverse bar 616. In the standing position of the seat 602 and when the actuator is retracting the seat towards the sitting position (but not yet fully retracted), the bar 616 forms a pivot at the top of the aperture 608. The shape of the top of the aperture permits the bar 616 to roll freely without causing any displacement between actuator 610 and seat 602. When the actuator 610 comes to the end of its travel, the transverse bar 616 moves into clearance from the aperture 608 and consequently seat 602, as is described below.

Figures 7A and 7B are front and side views of an arrangement including the connecting plate of Figures 6A and 6B and two actuator guides. The two actuator link plates 702 are shown, including the respective apertures 704. The transverse bar 706 is shown in place, controlled by the linearly extending member 708 (with only the distal part shown for clarity). A set of scales (load cell) 710 is shown diagrammatically, ready to receive the full weight of the seat (not shown) and occupant (not shown). Two actuator guides 712 are shown, with receiving surfaces 714 for receiving the transverse bar 706. As the actuator retracts the linearly extending member 708 to the end of its range, the transverse bar 706 is caused to engage with the actuator guides 712. The set of scales 710 is positioned appropriately and/or yields enough that the weight of the seat and occupant (not shown) is sufficient to cause the seat and consequently actuator plate 702 to proceed downwards to a position where the bar 706 is engaged with the actuator guides in clearance of the sides of the aperture 704, and the set of scales is in sole (upwards) contact with the seat and occupant, and is not in communication with the actuator, linearly extending member, or bar 706.

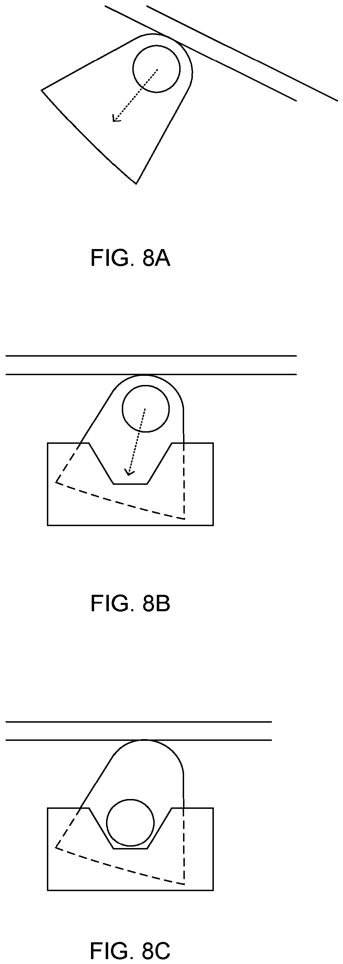

Figures 8A to 8C are schematics showing three stages of relative movement and engagement between the aperture and transverse bar shown in Figures 7A and 7B. This is a more visual demonstration of the process described above.

In Figure 8A, the seat is in (or near) the standing position. The bar, aperture and part of the seat are shown. The actuator link plate (not shown) which contains the aperture is mounted in a fixed location and angle to the seat (and is typically mounted at an angle appropriate for the geometry of the seat, plate and actuator arrangement). The transverse bar is nestled in the top of the aperture where it is free to roll.

In Figure 8B, the seat (in part), bar, aperture and actuator guide are shown. The seat has just reached the sitting position and is about to come into contact with the scales (not shown). The weight of the seat and occupant still acts on the transverse bar, pinning it into the top of the aperture.

In Figure 8C, the seat (in part), bar, aperture and actuator guide are again shown. The seat has come into contact with the scales (not shown), which now provides a reaction force against the weight of the seat and occupant. The bar continues to move downwards under the operation of the actuator (not shown), and comes to rest on the actuator guide. In this final position, the sitting position, the bar (and consequently the linearly extending member and actuator mechanism, not shown) is in clearance of the aperture and consequently the seat and occupant. The scales (not shown) are thus able to weight the occupant without any interference from any other part of the apparatus.

Thus a mechanism is provided which can engage and disengage a lifting mechanism with a seat portion (or other appropriate drive object) merely by extending and retracting a member. This can provide a relatively low cost system for weighing a person with reduced mobility.

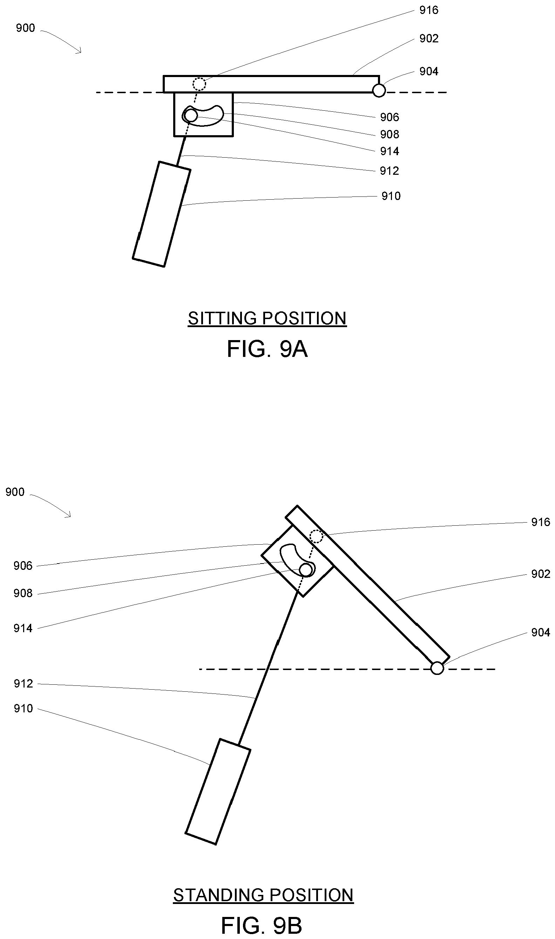

Figures 9A and 9B are schematics of an alternative embodiment, having a different shape of actuator link which allows the degrees of freedom of the seat portion to be controlled in dependence on the position of the seat. Figures 9A and 9B in particular show the engagement of the linearly extending lifting member of Figure 3 within an aperture of a connecting plate attached to the seat portion, shown in the sitting position and in the standing position. The arrangement 900 includes a seat portion 902 as above, the seat portion pivot point 904, a connecting plate 906 attached to the seat portion 902, an aperture 908 within the plate 906, an actuator or similar 910, an actuator pivot point 912, a linearly extending member 914, and a rod 916 extending transversely through the aperture 908 and fixed to the distal end of the linearly extending member 914. The 'virtual' pivot point 918 is shown, corresponding to the centre of relative rotation between the seat portion 902 and the extending member 914.

In the present embodiment two separate connecting plates 906 are provided with two separate but matching apertures 908, and the rod 916 passes transversely between both, threading through a hole in the distal end of the member 914 so as to secure it in place and prevent out of plane rotations (as pictured in Figures 9A and 9B) between the actuator and seat portion.

It will be appreciated from Figures 9A and 9B that the rod 916 moves across the aperture as the seat position changes. This basic design can allow different freedom of movement to be provided at different positions of the seat portion 902 as the rod contacts different parts of the aperture. An example aperture design will now be described.

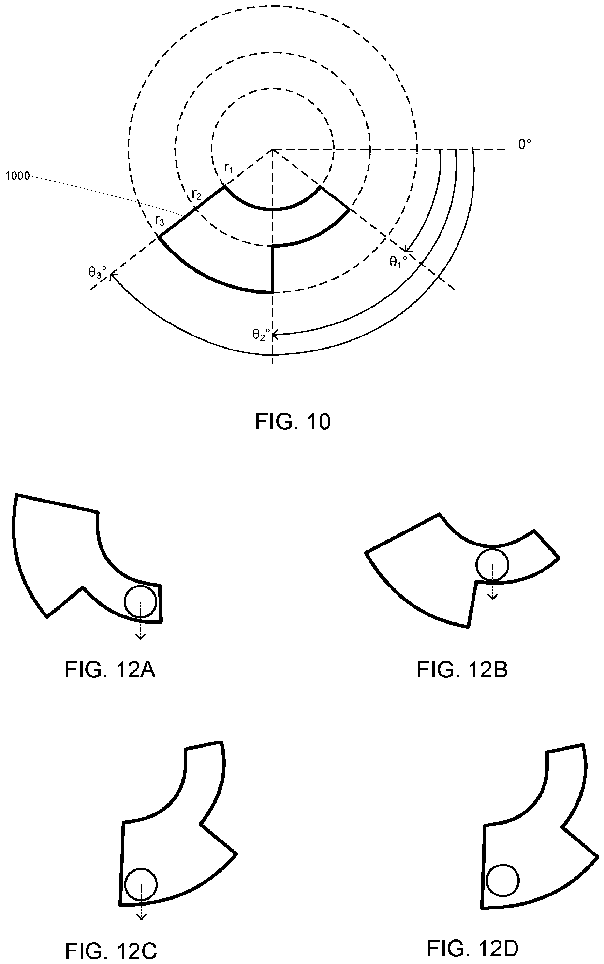

Figure 10 shows an aperture suitable for use in the apparatus of Figures 9A and 9B. The aperture 1000 is shown in thick lines. Also indicated on the figure are circles, representing different radial distances r₁, r₂, r₃ from the pivot point, and lines radiating out from the pivot point, representing different alignments of the rod and extending member (not shown) with the aperture at different points in the transition between sitting and standing positions of the seat portion. In this case, angle θ₁ (no connection to the angles shown in Figure 4) represents the angle subtended between the extending member and the seat portion when the seat portion is in the standing position (elevated/rotated). Angle θ₃ represents the angle subtended when the seat portion is in the sitting position (horizontal/flat and ready for weighing). Angle θ₂ represents a transition point between a region to the right where the aperture constraints the rod tightly, preventing any free movement of the seat, and a region to the left where the rod is free to move up and down, meaning that the seat portion is not tightly engaged with the extending member at that point.

In the expanded region, there is a 'dead zone' or hysteresis, where the rod attached to the extending member can be moved into the middle of the aperture and thereby avoid all contact with the aperture or, by extension, the seat portion. As before, this can allow weighing without any external influence from the lifting mechanism. More generally, this mechanism can provide a way to vary the freedom of movement of the seat portion in dependence on its rotation without any complicated extra components to allow such a decoupling (or indeed any extra components whatsoever).

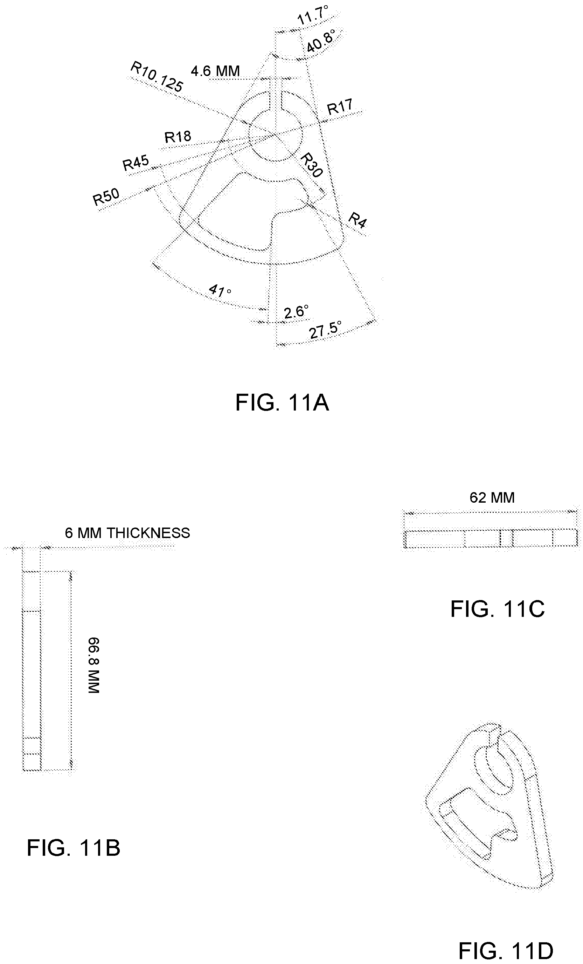

Figures 11A to 11D show detailed dimensions of a connecting plate including an aperture suitable for use in the apparatus of Figures 9A and 9B. The dimensions are marked on in millimetres. This detailed embodiment has extra features for improved performance, such as smooth transitions in the aperture surface and a central hole for attaching to the seat portion (with a cut-out part to receive a wedge to prevent rotation of the plate relative to the seat portion). With the smooth curves, the interior surface of the connector plate behaves essentially like a cam surface, and the rod attached to the extending member behaves essentially like a cam follower, although in fact the rod drives the connector plate. Various techniques in the field of cams and followers which improve contact and efficiency between the cam surface and follower and/or which reduce wear can be applied to the present apparatus as appropriate.

Figures 12A to 12D are schematics showing four stages of relative movement and engagement between the aperture of Figure 10 and a transverse bar driven by a lifting member. This is a more visual demonstration of the process described above. In Figure 12A, the rod is at the furthest extent to the right of the aperture as the seat portion (not shown) is in the standing position. The extending member (and consequently the rod) is retracted, causing the rod to push 'down' on the lower aperture surface as indicated. In Figure 12B, the downward movement of the extending member and the seat portion has caused the rod to shift leftwards in the aperture. In Figure 12C, the movement towards the sitting position has completed, and the rod exerts a downward force against the lower surface of the aperture as shown. In Figure 12D, the extending rod is given an (optional) small extension to take it out of contact entirely with the aperture. Thus an alternative mechanism is provided which can engage and disengage a lifting mechanism with a seat portion (or other appropriate drive object) merely by extending and retracting a member. This can provide a relatively low cost system for weighing a person with reduced mobility.

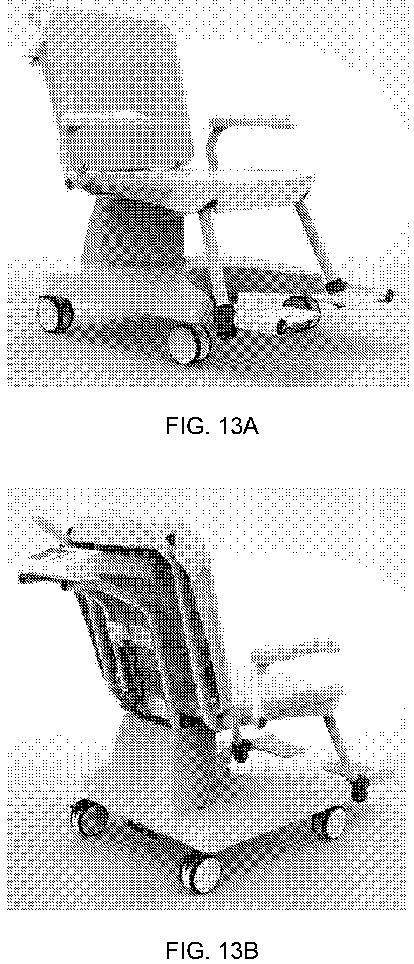

Figures 13A and 13B are perspective views of an example weighing chair embodying the apparatus of Figure 1. Here a fully worked example of the chair is given, based on the chair shown in Figure 5. Both the arm rests and the foot rests are retractable. The foot rests retract sideways, providing ample room for the person to stand up when the seat portion is lifted up as described above. In the preferred embodiment the foot rests rotate at least 180 degrees so that both the front and side of the weighing chair are unobstructed, and (separately, optionally) the arm rests retract beyond and behind their pivot point such that they too do not obstruct either the front or sides of the chair. Horizontal, vertical or other pivot points can be used, and in some cases two sets of pivots/movements (that is, at least two degrees of freedom) can be provided, for example in relation to the foot rests, so as to permit them to be moved substantially completely out of the way. This can allow an occupant to be moved into the chair from either the front or from either side, and from a wheelchair or similar apparatus without significant obstruction, for example.

Brakes may be provided and applied to the wheels as appropriate. A hollow in the back rest provides appropriate cable management within easy reach, and a control panel allows both weighing operations and activation of the lifting mechanism. Other arrangements are of course possible.

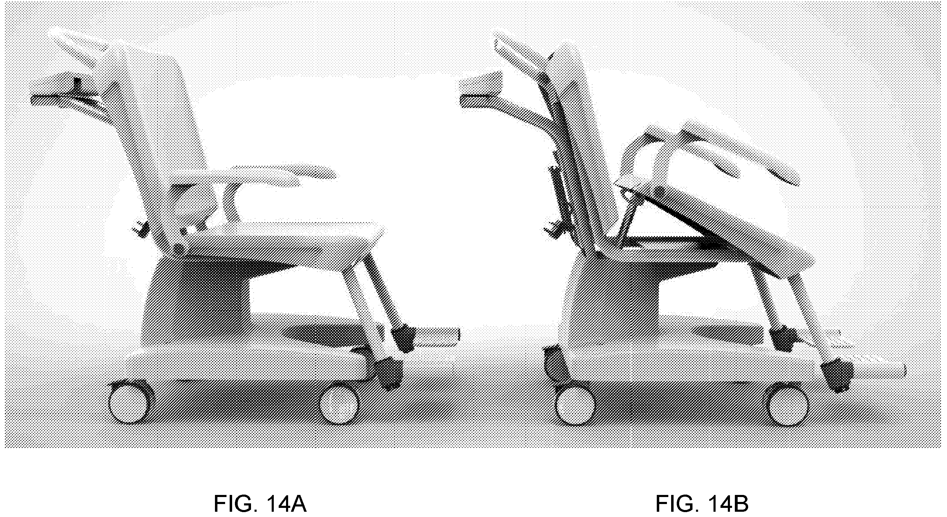

Figures 14A and 14B are perspective views of the weighing chair of Figures 13A and 13B with the seat in a sitting position and in a standing position. Smaller or larger rotations of the seat portion are possible, and other configurations of the chair are possible as necessary and/or appropriate.

Various features have been described above in relation to a weighing chair, but variants are possible in which the operative elements described above are provided in alternative forms. Appropriate modifications may be made for example to incorporate the above-mentioned features into a hospital bed (in-patient or out-patient), into an otherwise ordinary chair, sofa or bed, and so on. The relevant object may be mobile (for example have wheels) or not, and may for example be suspended from a ceiling rather than stand on the floor. The concepts described herein can of course also be used to weigh things rather than people, or for any other appropriate purpose.

It will be appreciated that further modifications may be made to the invention, where appropriate, within the spirit and scope of the claims.

## Claims

1. Apparatus for weighing a person with reduced mobility, the apparatus comprising:
a seat portion;
scales for weighing the person when sitting on the seat portion; and
a lifting mechanism to assist the person in standing up from the seat portion, wherein the lifting mechanism is operable to move the seat portion between:
a sitting position, for engaging with the person in a sitting position, and
a standing position, for engaging with the person in a standing position, wherein, in the sitting position, the seat portion contacts the scales and does not contact the lifting mechanism.

2. Apparatus according to Claim 1, wherein the lifting mechanism acts on the seat portion and the seat portion urges the person to a standing position.

3. Apparatus according to Claim 2, wherein the lifting mechanism is operable to move the centre of gravity of the seat portion in an upwards direction.

4. Apparatus according to Claim 2 or 3, wherein the lifting mechanism is operable to rotate the seat portion so as to raise the rear of the seat relative to the front of the seat.

5. Apparatus according to any preceding claim, wherein the lifting mechanism is operable in reverse to assist the person in sitting down on the seat portion.

6. Apparatus according to any preceding claim, wherein, in the standing position, the seat portion contacts the lifting mechanism.

7. Apparatus according to any preceding claim, wherein the seat portion has a first range of movement from the standing position to the sitting position, the lifting mechanism has a second range of movement from the standing position to the sitting position, and the second range of movement is greater than the first, such that when the seat portion reaches the end of its movement and comes to rest on the scales, the lifting mechanism is operable to continue its movement into clearance of the seat portion.

8. Apparatus according to any one of any preceding claim, wherein the lifting mechanism comprises a lifting member which engages with the seat portion at an engagement region, and wherein the apparatus further comprises at least one actuator guide for restraining the lifting member at the end of a movement of the seat portion to the sitting position.

9. Apparatus according to Claim 8,
wherein the seat portion rotates about a seat pivot axis between a first angle corresponding to the sitting position and a second angle corresponding to the standing position, and
wherein the lifting member is a linearly extendable member, such that reciprocating motion of the extendable member is converted into a rotation of the seat portion about the seat pivot axis.

10. Apparatus according to Claim 8 or 9, wherein the lifting member is constrained within an aperture in an actuator link plate attached to the seat portion, the aperture defining the linear freedom of movement of the seat portion relative to the lifting member.

11. Apparatus according to Claim 10, wherein the aperture is shaped such that rotation of the lifting member relative to the seat portion causes the lifting member to be constrained by different parts of the aperture.

12. Apparatus according to Claim 11 wherein different parts of the aperture permit different degrees of freedom of the seat portion relative to the lifting member.

13. Apparatus according to any preceding claim, wherein the person can be moved into position on the seat portion from at least one side of the apparatus as well as from the front.

14. Apparatus according to any preceding claim, further comprising at least one rest selected from: a back rest, at least one foot rest, and at least one arm rest.

15. Apparatus according to Claim 14, wherein said at least one rest is moveable between a deployed position and a stowed position, wherein when said at least one rest is in the stowed position, unobstructed access is provided to the seat portion from the front and from at least one side of the apparatus.
